Europäisches Patentamt

**European Patent Office**

Office européen des brevets

(11) Numéro de publication: **0 025 728**
A1

(12) **DEMANDE DE BREVET EUROPEEN**

(21) Numéro de dépôt: **80401187.2**

(22) Date de dépôt: **13.08.80**

(51) Int. Cl.³: **G 02 B 7/26**

(30) Priorité: **13.09.79 FR 7922886**

(43) Date de publication de la demande: **25.03.81**
Bulletin 81/12

(84) Etats contractants désignés: **DE GB IT NL SE**

(71) Demandeur: **THOMSON-CSF, 173, Boulevard Haussmann, F-75360 Paris Cedex 08 (FR)**

(72) Inventeur: **Richin, Philippe, THOMSON-CSF SCPI 173, bld Haussmann, F-75360 Paris Cedex 08 (FR)**
Inventeur: **d'Auria, Luigi, THOMSON-CSF SCPI 173, bld Haussmann, F-75360 Paris Cedex 08 (FR)**
Inventeur: **Combemale, Yves, THOMSON-CSF SCPI 173, bld Haussmann, F-75360 Paris Cedex 08 (FR)**
Inventeur: **Jacques, André, THOMSON-CSF SCPI 173, bld Haussmann, F-75360 Paris Cedex 08 (FR)**

(74) Mandataire: **Wang, Pierre et al, "THOMSON-CSF" - SCPI 173, bld. Haussmann, F-75360 Paris Cedex 08 (FR)**

(54) **Dispositif de couplage entre une source lumineuse à rayonnement divergent, et une fibre optique, et procédé de réalisation d'un tel dispositif.**

(57) Le dispositif comprend une lentille plan-convexe (2) accolée à la face d'entrée (P) de la fibre (1), constituée d'un verre d'indice de réfraction supérieur à celui de la fibre et obtenue en mettant en contact l'extrémité de la fibre (1) avec une goutte de verre (11) en fusion. On obtient une calotte sphérique dont les paramètres sont contrôlables.

EP 0 025 728 A1

# DISPOSITIF DE COUPLAGE ENTRE UNE SOURCE LUMINEUSE
## A RAYONNEMENT DIVERGENT ET UNE FIBRE OPTIQUE ET
## PROCEDE DE REALISATION D'UN TEL DISPOSITIF

L'invention concerne un dispositif de couplage entre une source de lumière émettant un rayonnement divergent et une fibre optique.

Le problème du couplage entre une source à rayonnement divergent, notamment un laser semi-conducteur a été étudié dans le but d'augmenter la fraction de rayonnement captée par la fibre. Le couplage direct, dans lequel la source et la fibre sont simplement placés face à face sans élément optique intermédiaire, a une efficacité très mauvaise en raison des faibles dimensions de la fibre et de l'ouverture, généralement grande, du faisceau laser. Il a été étudié des configurations optiques diverses à base de cônes, de lentilles cylindriques, hémicylindriques ou sphériques, de lentilles hémisphériques. Les études théoriques et pratiques montrent que l'on obtient des résultats particulièrement intéressants avec une lentille hémisphérique accolée à l'extrémité de la fibre. Différentes méthodes de fabrication ont été proposées. Parmi celles-ci, le thermoformage, qui consiste à faire fondre l'extrémité de la fibre à l'aide d'un moyen quelconque, a été décrit notamment dans "Applied Optics" Vol. 14, No 2, pages 294-298 et dans "Applied Optics" Vol. 14, No 12, pages 2815.2816. Du fait de la nature différente des matériaux formant le coeur et la gaine de la fibre, cette méthode ne permet pas d'obtenir de bonnes qualités optiques pour tous les types de fibres. Benson a d'ailleurs montré dans le deuxième article cité ci-dessus qu'on n'obtient des résultats intéressants que pour certaines valeurs du rapport entre le diamètre de coeur et le diamètre de gaine. D'autre part, cette technique nécessite souvent, surtout pour les fibres en silice couramment utilisées, des températures très élevées, donc un appareillage lourd. Une structure hétérogène a été décrite par Timmermann dans "Applied Optics" Vol. 15, No 10, pages 2432-2433. La gaine de la fibre est presque entièrement enlevée par attaque chimique et la lentille est obtenue par trempé dans un matériau à bas point de fusion : de l'époxy pour une fibre en verre, de l'époxy ou du verre pour une fibre en silice. Le verre n'est donc pas utilisable pour n'importe quelle fibre et la résine pose des problèmes de vieillissement.

La présente invention vise la réalisation d'une lentille plan-convexe en verre de haut indice sur n'importe quel type de fibre. La gaine de la fibre est maintenue intacte, ou bien est partiellement attaquée en vue de réduire son diamètre. Le choix du verre à bas point de fusion permet d'utiliser un appareillage simple. La bonne adhérence des jonctions verre-verre et verre-silice permet une bonne tenue mécanique et un bon vieillissement. Un indice élevé, supérieur à celui des matériaux constituant la fibre, permet d'obtenir un couplage optimum et des tolérances de positionnement laser-fibre facilement réalisables. Le diamètre de la lentille peut être choisi de façon à optimiser le rendement de couplage.

L'invention a principalement pour objet un dispositif de couplage entre une source lumineuse à rayonnement divergent et une fibre optique, comprenant une lentille plan-convexe dont la face plane coïncide avec la face d'entrée de la fibre et a une section quasi-circulaire, caractérisé en ce que cette lentille est constituée d'un verre d'indice de réfraction supérieur et de température de fusion inférieure à ceux des matériaux constituant la fibre.

D'autres caractéristiques et avantages de l'invention apparaitront au moyen de la description qui suit, en référence aux figures annexées :

- la figure 1 représente une fibre optique munie d'une lentille de couplage ;

- la figure 2 représente schématiquement un appareil de réalisation de la lentille ;

- la figure 3 représente trois formes de lentilles obtenues ;

- la figure 4 montre les paramètres nécessaires pour l'optimisation du couplage ;

- la figure 5 représente un système de transmission optique ;

- la figure 6 représente un support de positionnement du laser et de la fibre.

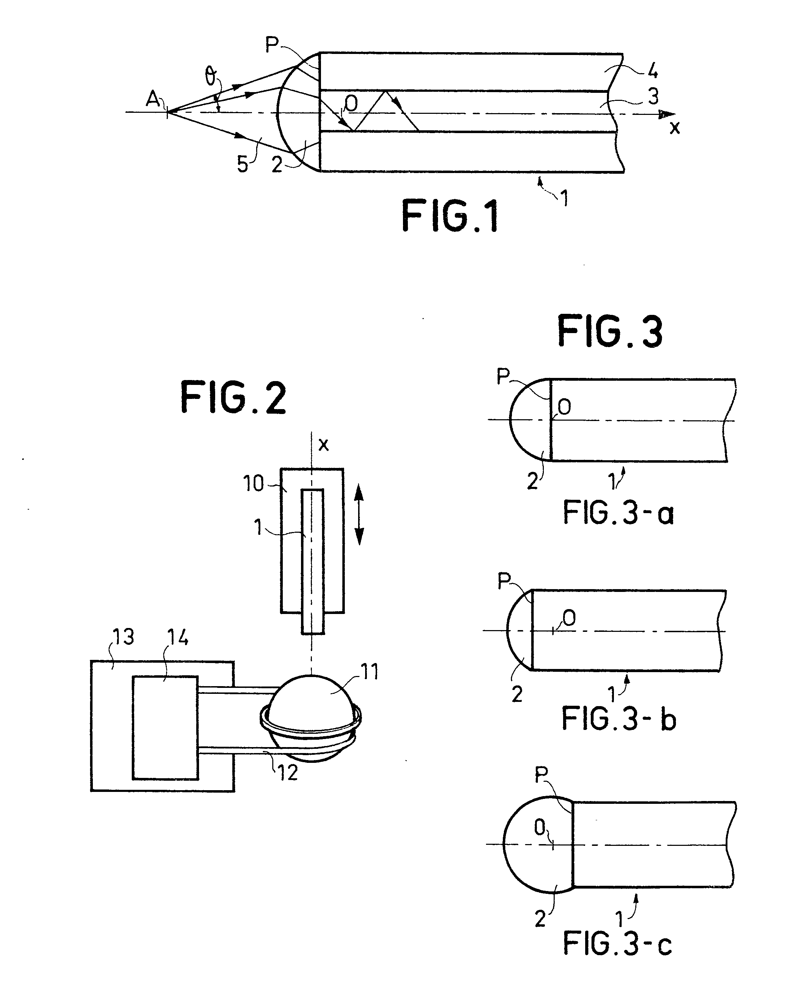

La figure 1 représente en coupe une fibre optique 1 munie d'une lentille de couplage 2 destinée à améliorer le couplage entre la fibre et une source lumineuse placée en un point A que l'on considère tout d'abord situé sur l'axe x de la figure 1. Selon l'invention, la lentille de couplage 2 est réalisée sur l'extrémité de la fibre 1 faisant face au point A et formant une surface plane P perpendiculaire à l'axe x. La source placée en A émettant un faisceau divergent 5 de demi-angle au sommet $\theta$ , la lentille 2 fait converger ce faisceau vers la face d'entrée P. Seule une partie du faisceau remplit les conditions de propagation dans le coeur 3 de la fibre. On a représenté sur la figure l'un des rayons remplissant ces conditions. Celles-ci sont fonction du diamètre du coeur 3, de celui de la lentille 2, de son indice , et de l'ouverture numérique de la fibre 1. Si la fibre 1 est destinée à être connectée à une autre fibre d'ouverture numérique plus faible, c'est cette dernière qui est à prendre en compte pour les conditions de couplage proprement dites. L'amélioration du couplage, apportée par la lentille, consiste en une augmentation de la fraction de rayonnement couplée, dûe à la convergence opérée.

Pour réaliser l'association fibre-lentille représentée sur la figure 1, il faut tout d'abord obtenir une extrémité de fibre nette et dans le plan recherché. Une méthode préconisée consiste à opérer par cassure. On peut notamment effectuer cette cassure à l'aide d'un diamant présentant un fil très fin (de l'ordre du micron), ce qui permet d'obtenir un plan d'excellente qualité, la perturbation résultant de la trace dûe à l'attaque du diamant ayant une dimension négligeable devant les dimensions de la lentille à réaliser. Avant d'opérer la cassure, il a bien sûr fallu enlever l'enveloppe de protection de la fibre brute sur 1 cm environ. Les faces d'entrée et de sortie de la fibre ayant ainsi été préparées, on les nettoie par un procédé classique, à base de Décon.

Selon l'invention, la lentille 2 est une lentille plan-convexe formant une calotte sphérique dont le centre O est situé sur l'axe x. Elle est formée dans un matériau transparent ayant un indice de réfraction n nettement supérieur à ceux du coeur 3 et de la gaine 4 de la fibre. Le choix d'un indice élevé sera justifié dans la suite de la description. On a démontré en effet et constaté expérimentalement que, quelque soit la source lumineuse à coupler, le coefficient de couplage est d'autant plus grand que l'indice n est élevé. Le choix du matériau à utiliser a été guidé par les propriétés d'adhérence, de tenue mécanique, et surtout par les valeurs d'indice de réfraction et de température de fusion. C'est ainsi que l'on est amené à choisir un verre plutôt qu'un plastique. Le choix du verre assure une certaine continuité structurelle entre la lentille et la fibre, qu'elle soit en verre ou en silice.

La figure 2 montre les éléments principaux d'un dispositif permettant de déposer la calotte sphérique en verre sur l'extrémité préparée de la fibre 1. Celle-ci est maintenue et positionnée par un support mobile 10, de préférence dans une position verticale. Une goutte de verre en fusion 11 est retenue dans un filament chauffant 12 porté par un porte-filament 13 également mobile. La forme du filament est très importante car elle détermine la forme de la goutte de verre 11, qui dépend aussi de la pesanteur. L'axe x de la fibre doit être parfaitement centré par rapport au filament. Sa verticalité assure une symétrie de révolution. Lorsque les positionnements relatifs sont effectués, contrôlés au microscope, l'extrémité de la fibre 1 est mise en contact avec la goutte de verre 11, puis éloignée. Elle comporte avec elle une petite quantité de verre qui, du fait des tensions superficielles, se met sous la forme d'une calotte dont le centre est sur l'axe x, à condition que le positionnement ait été bien effectué à l'extrémité de la fibre. Après le dépôt, si la forme du ménisque ne correspond pas à la forme escomptée : par exemple, existence d'un méplat provenant du fait que la fibre a été retirée trop rapidement, ou hauteur du ménisque incorrecte, on peut toujours restituer l'opération pour corriger dans le sens voulu. Avant la mise en contact de la fibre avec le verre fondu, il est préférable de la maintenir au voisinage du filament chauffant pendant quelques secondes pour amener l'extrémité de la fibre à la même température que le verre, ce qui évite tout choc thermique qui détériorerait la fibre.

La température du verre en fusion se situe entre l'état pateux et le début de la décomposition. Il est très important qu'elle soit inférieure à la température de ramollissement de la fibre. Basse température de fusion et indice élevé sont d'ailleurs souvent liés pour le verre. Ce fait permet d'éviter les inconvénients de la technique connue constituant à créer la calotte sphérique en faisant fondre le bout de la fibre : migration de matière vers l'extrémité, risquant d'entrainer poussières ou inhomogénéités, impossibilité d'obtenir un couplage optimal pour n'importe quelle fibre à cause de la nature différente des matériaux de coeur et de gaine. Le choix d'une basse température permet en outre d'utiliser un appareillage simple pour la mise en oeuvre du procédé.

Le procédé le l'invention a été essayé essentiellement avec trois types de verre dont les indices de réfraction pour une longueur d'onde de 8521 $\overset{o}{A}$ et la température de transformation sont respectivement 1,88 - 396°, 1,60 - 432°C, 1,48 - 464°C. La température désirée est obtenue en réglant l'intensité de l'alimentation électrique 14 du filament. Les faibles valeurs de température nécessaires permettent d'utiliser avantageusement pour la réalisation de l'invention une microforge de Fonbrune, utilisée habituellement pour la fabrication de micro-outils. On peut utiliser pour le filament un matériau dont la température de fusion n'est pas très élevée. Le filament peut être, par exemple, en platine rhodié à 30% qui fond à 1910°.

La forme de la calotte sphérique, notamment la position de son centre, dépendent de paramètres contrôlables qui sont la température du verre en fusion, les vitesses d'approche et d'éloignement de la fibre par rapport au filament chauffant et les variations de température ainsi obtenues. La figure 3 représente 3 types de calottes pouvant être obtenus avec des conditions de dépôt différentes. Sur la figure 3a, la calotte est hémisphérique, c'est à dire que son centre O est situé dans la plan P. Sur la figure 3b, le centre O est situé à l'intérieur de la fibre. Sur la figure 3c, le centre O est situé entre le point A et l'extrémité de la fibre. La bonne reproductibilité du procédé peut permettre une automatisation des opérations, une fois déterminés les paramètres : température, vitesses de rapprochement et d'éloignement respectifs de la fibre et du filament chauffant.

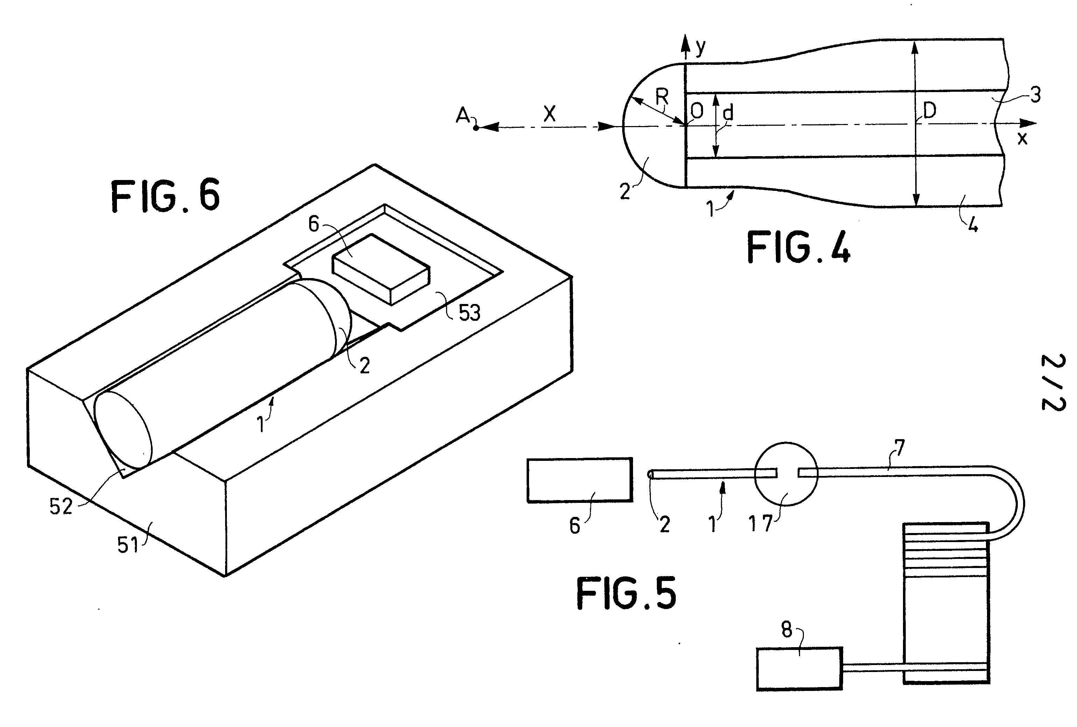

Ainsi qu'il a été dit, le procédé de l'invention permet d'obtenir n'importe quelle forme de lentille (position du centre, diamètre). Il permet donc l'optimisation du couplage, telle qu'on peut la déterminer par le calcul et la vérifier par l'expérience. Les paramètres nécessaires pour cette optimisation sont définis sur la figure 4 pour une lentille hémisphérique. Il s'agit du diamètre d du coeur, du rayon R de la demisphère, de la distance X + R entre le point A et le centre O, de l'indice n de la lentille et de l'ouverture numérique ON de la fibre. Le mode de calcul est voisin de celui détaillé par l'article de C.A.BRACKETT dans la revue "Journal of Applied Optics", vol 45, No 6, juin 1974, la seule différence étant que cet article se rapporte à la technique de fusion de l'extrémité de la fibre, si bien que l'indice de la lentille est sensiblement égal à celui du coeur de la fibre. L'optimisation est recherché, à titre d'exemple, pour une fibre de diamètre de coeur 50 m et une ouverture numérique de 0,18.

D'autre part, on désire admettre des tolérances de positionnement de la source, par exemple + 0,1 pour $\frac{x_0}{R}$ et $\frac{y_0}{R}$, $x_0$ et $y_0$ étant les coordonnées du point A par rapport à l'axe x et à un axe y issu de O et perpendiculaire à x. On recherche une ouverture de faisceau sin maximale, pour différentes valeurs de n entre 1,48 et 1,88. Pour chaque valeur d'indice, on montre qu'il existe une valeur optimale pour $\frac{X}{R}$, puis une valeur optimale pour R : celle qui donne l'angle $\theta$ maximal. Par exemple, pour n = 1,60, on obtient : R = 40 $\mu$m, X = 37$\mu$m, $\sin\theta$ = 0,51 ; pour n = 1,88, on obtient R = 45,5$\mu$m, X = 34$\mu$m, $\sin\theta$ = 0,52. Compte-tenu de la technique de dépôt, cette valeur de R est égale à la moitié du diamètre de la gaine au voisinage de l'extrémité. Le plus souvent, elle ne correspond pas à celle du diamètre de gaine D de la fibre utilisée, généralement plus grand. On peut donc soit diminuer le diamètre de la fibre par attaque chimique pour obtenir la valeur optimale, soit conserver la fibre intacte et se contenter de valeurs non optimisées. Le choix dépend des exigences que l'on s'est fixé. Dans le deuxième cas, pour un diamètre D de 125$\mu$m (d'où R = 62,5$\mu$m), on obtient pour n = 1,60 : X = 58$\mu$m et ON = 0,34 et pour n = 1,88 : X = 47$\mu$m et ON = 0,43. On constate que dans les deux cas, plus l'indice est élevé, plus l'angle $\theta$ est grand. D'autre part, comme on s'est fixé des valeurs relatives de tolérances : $\frac{x_0}{R}$ et $\frac{y_0}{R}$, la valeur de R détermine les valeurs de tolérances absolues X et $y_0$, qui augmentent avec R, donc, avec l'indice.

Lorsque l'on désire un diamètre de fibre inférieur au diamètre réel des fibres dont on dispose, on opère une réduction de diamètre à l'extrémité par attaque chimique dans une solution d'acide fluorhydrique. On utilise, par exemple, une solution à 40% et la gaine est attaquée sur environ 1 cm de longueur. L'opération peut se faire à température ambiante. On constate que l'acide fluorhydrique attaque en priorité le coeur de la fibre, si bien que, en l'absence de précautions particulières, la surface obtenue n'est pas plane mais constitue une lentille divergente, ce qui nuit au couplage. Pour éviter l'attaque du coeur, il est préférable de le protéger avec une cire que l'on enlève ensuite. La vitesse d'attaque de la gaine étant connue (environ 1 m par minute), on peut déterminer la durée nécessaire. Par ailleurs, un contrôle permanent du diamètre peut être effectué. Un fois le diamètre recherché atteint, la fibre est rincée, et c'est alors que l'on prépare son extrémité par cassure, comme indiqué plus haut.

L'amélioration apportée par l'invention peut être évaluée par la mesure de l'atténuation de la puissance lumineuse émise par la source, à la sortie d'un système de transmission de la lumière bien caractérisé. En effet, le dispositif de couplage selon l'invention, est destiné à faire partir d'un système de transmission du type comprenant :

- une source lumineuse, généralement un laser à semi-conducteur dont les caractéristiques sont connus, notamment son diagramme de rayonnement ;

- une fibre optique de liaison, qui peut être longue de quelques mètres à plusieurs km, également connue, en particulier par son ouverture numérique et son atténuation en fonction du la longueur d'onde de la lumière qu'elle propage ;

- le dispositif de couplage, introduit entre la source et la fibre, comprenant la fibre 1, que l'on peut appeler fibre de référence, et qui mesure quelques cm, et la lentille plan-convexe 2, possédant les caractéristiques définies ci-dessus.

Un système de transmission typique, utilisable pour la mesure de l'atténuation, est représenté sur la figure 5. La source 6, est un laser GaAs/GaAlAs. Sa puissance en continu est égale à 2mW. Sa longueur d'onde est égale à 0,83 $\mu$m. Son diagramme de rayonnement peut être caractérisé par la mesure de la puissance émise en fonction de l'angle d'émission, dans des plans parallèles et perpendiculaires à la jonction semi-conductrice. Etant donné la symétrie de révolution du dispositif de couplage, la caractéristique la plus intéressante est la puissance totale émise dans un cône de demi-angle au sommet $\theta$ . D'après les résultats donnés précédemment, l'ouverture du faisceau couplé dans la fibre 1 est de l'ordre de $\sin\theta=0,5$. Pour cette valeur, la fraction de puissance couplée par rapport à la puissance disponible du laser $P_E$ est de l'ordre de 0,7. Le laser 6 est placé sur un support mobile en rotation selon un axe perpendiculaire au plan de la jonction, et mobile en translation selon trois axes perpendiculaires x, y, z. La fibre de liaison 7, est enroulée et mesure environ 600 m. Son atténuation vaut environ 2,6 dB/km, ce qui donne une atténuation totale de 1,56 dB et un coefficient de transmission de 0,7. Son ouverture numérique est égale à 0,18.

Le dispositif de couplage à tester, c'est à dire la fibre intermédiaire 1 munie de la lentille 2, est fixée, en amont, sur un support mobile en rotation suivant un axe perpendiculaire à celui de la fibre et à l'axe de rotation du support du laser. Elle est fixée, en aval, sur un support permettant son couplage avec la fibre de liaison 7. L'extrémité de celle-ci est rendue mobile en translation et rotation pour assurer l'optimisation de la connexion 17 entre les deux fibres. Celle-ci s'effectue avec de la glycérine comme liquide adaptateur d'indice. La sortie de la fibre 7 est positionnée devant un photodétecteur 8, la connexion s'effectuant également dans un liquide adaptateur d'indice. Le signal de sortie du détecteur permet de mesurer la puissance lumineuse transmise $P_S$. Pour le réglage des différents positionnements, on recherche un maximum de puissance de sortie $P_S$. On effectue ainsi les réglages de la connexion fibre 1-fibre 7 du couplage laser 6-fibre 1. La puissance délivrée par le laser 6, $P_E$ étant contrôlée pour être toujours égale à 2mW, on mesure le rapport $\dfrac{P'_S}{P_E}$ correspondant au rapport $\dfrac{P_S}{P_E}$ moins la perte dans la fibre 7, la distance X entre la face de sortie du laser 1 et le sommet de la lentille 2, et les tolérances de positionnement relatif laser-fibre dans les 3 directions x, y, z : x, y, z pour lesquelles le rapport $\dfrac{P'_S}{P_E}$ chute de 10% à 50%, x est l'axe de la fibre, y et z perpendiculaires étant respectivement dans le plan de la jonction et perpendiculaires à ce plan. On a obtenu, pour une lentille d'indice 1,88 et une fibre de diamètres d = 50 m et D = 125 m, les résultats moyens suivants :

- sans réduction de diamètre : X = 46$\mu$m, $\dfrac{P'_S}{P_E}$ = 2,6dB, $\Delta$x = 12$\mu$m, $\Delta$y = 5$\mu$m, $\Delta$z = 4$\mu$m pour une chute de 10% et $\Delta$x = 58$\mu$m, $\Delta$y = 11$\mu$m, $\Delta$z = 9,5$\mu$m pour une chute de 50% ;

- avec réduction de diamètre (2R = 91$\mu$m) : X = 35$\mu$m, $\dfrac{P'_S}{P_E}$ = 1,2 dB, $\Delta$x = 10 $\mu$m, $\Delta$y = 3,5$\mu$m, z = 3$\mu$m pour une chute de 10%, $\Delta$x = 40$\mu$m, $\Delta$y = 7$\mu$m, $\Delta$z = 7 $\mu$m pour une chute de 50%. Avec des lentilles d'indice inférieur, on a vérifié que l'atténuation $\dfrac{P'_S}{P_E}$ augmente, ainsi que les tolérances. Dans tous les cas, les tolérances sont voisines ou supérieures à 5 µm, c'est à dire que le positionnement est toujours réalisable avec des supports de positionnement classiques. On vérifie d'autre part que, lorsque le diamètre 2R est réduit à sa valeur optimale établie plus haut, l'atténuation diminue d'environ 0,7 dB, alors que les tolérances diminuent d'environ 2µm. On peut avoir des tolérances plus faciles à obtenir en choisissant une lentille d'indice 1,60, correspondant à un diamètre optimisé 2R = 80µm, pour laquelle les tolérances en y et z sont alors de l'ordre de 5µm. Ces résultats sont à comparer avec ceux d'un couplage sans lentille, tous les autres éléments des systèmes étant identiques. On a mesuré alors, avec une fibre de diamètre D = 125µm, $\frac{P_S}{P_E}$ = 6,6 db. La lentille 2 d'indice 1,88 apporte donc un gain de 4dB sans réduction du diamètre de la fibre et de 4,7 dB avec un diamètre de fibre optimisé.

Lorsque la lentille de couplage est proche du laser, ce qui est le cas d'après les résultats précédents, une partie de la lumière se réfléchit sur la face convexe de la lentille et n'est pas récupérée dans la fibre. Pour remédier à cet inconvénient, on peut déposer sur cette face une couche diélectrique dont l'indice soit voisin de $\sqrt{n}$, soit pour n = 1,88 : 1,37, sur une épaisseur $\frac{\lambda}{4\sqrt{n}}$, soit pour une longueur d'onde de la lumière $\lambda$ = 0,84µm : 0,15µm. Parmi les matériaux diélectriques connus, le fluorure de magnésium, avec un indice de 1,38, convient particulièrement. On a donc déposé par évaporation sous vide, des couches de fluorure de magnésium d'épaisseur contrôlée sur les lentilles réalisées. On a constaté une amélioration supplémenaire de l'atténuation de 0,6 dB environ.

Un exemple de support de positionnement permettant d'atteindre les valeurs de tolérance indiquées est représenté sur la figure 6. Il s'agit d'un socle de cuivre 51 dans lequel a été réalisée une rainure 52 en forme de V. Pour obtenir des flancs plans ayant une inclinaison très précise, il est avantageux d'utiliser le procédé dé crit dans la demande de brevet français déposée par la demanderesse le 18 Mai 1978 sous le N ° 78 14 763 et publié sous le N° 2 426 271. En effet, selon ce procédé, la rainure 52 reproduit en négatif un dièdre formé par attaque chimique de silicium monocristallin, attaque qui s'effectue préférentiellement suivant des axes du cristal. En même temps que la rainure 52, est réalisée une empreinte 53 formant une zone plane destinée à servir d'assise au laser semi-conducteur. Celui-ci est soudé sur cette zone 53 du socle, de telle façon que ses couches successives soient parallèles au plan. La fibre optique 1 préparée et réalisée selon la méthode décrite ci-dessus, est placée dans la rainure 52. L'empreinte 53 et la rainure 52 sont prévues en fonction de la structure de la plaquette laser et du diamètre de la fibre de façon que la couche active du laser soit dans le plan diamétral de la fibre.

## REVENDICATIONS

1. Dispositif de couplage entre une source lumineuse (A) à rayonnement divergent (5) et une fibre optique (1), comprenant une lentille planconvexe (2) dont la face plane coïncide avec la face d'entrée (P) de la fibre et a une section quasi-circulaire, caractérisé en ce que cette lentille (2) est constituée d'un verre d'indice de réfraction supérieur et de température de fusion inférieure à ceux des matériaux constituant la fibre.

2. Dispositif de couplage selon la revendication 1, caractérisé en ce que la fibre est en verre.

3. Dispositif de couplage selon la revendication 1, caractérisé en ce que la fibre est en silice.

4. Dispositif de couplage selon l'une des revendications 2 et 3, caractérisé en ce que la lentille (2) est hémisphérique de diamètre supérieur à celui du coeur (3) de la fibre (1).

5. Dispositif de couplage selon l'une des revendications 2 et 3, caractérisé en ce que le centre de la lentille (O) est sur l'axe de la fibre (x) à l'intérieur de celle-ci.

6. Dispositif de couplage selon l'une des revendications 2 et 3, caractérisé en ce que le centre de la lentille (O) est sur l'axe de la fibre (x) à l'extérieur de celle-ci.

7. Dispositif de couplage selon l'une quelconque des revendications 4 à 6, caractérisé en ce qu'il comprend en outre une couche diélectrique antiréfléchissante, déposée sur la face convexe de la lentille.

8. Dispositif de couplage selon la revendication 7, caractérisé en ce que la couche antiréfléchissante est constituée de fluorure de magnésium.

9. Procédé de réalisation d'un dispositif de couplage selon l'une quelconque des revendications 1 à 8, caractérisé en ce qu'il comprend les étapes suivantes :

- préparation d'une des extrémités de la fibre (1) de façon à obtenir une surface plane (P) quasi-circulaire de diamètre prédéterminé supérieur à celui du coeur (3) de la fibre (1);

- mise en contact de l'extrémité préparée avec une goutte du verre (11) choisi en fusion ;

- éloignement de la fibre (1) pour obtenir une calotte sphérique.

10. Procédé selon la revendication 9, caractérisé en ce que la goutte de verre en fusion (11) est retenue par un filament chauffant (12).

11. Procédé selon l'une des revendications 9 et 10, caractérisé en ce que la préparation de l'extrémité de la fibre (1) comprend la cassure de la fibre au moyen d'un diamant.

12. Procédé selon la revendication 11, caractérisé en ce que la préparation de l'extrémité de la fibre (1) comprend en outre la réduction de son diamètre à la valeur prédéterminée par attaque chimique de sa gaine (4) sur une fraction de sa longueur et sur une épaisseur appropriée.

13. Procédé selon l'une quelconque des revendications 9 à 12, caractérisé en ce qu'il comprend en outre l'étape suivante :

- dépôt d'une couche antiréfléchissante sur la face convexe de la calotte sphérique de verre.

1/2

0025728

FIG.1

FIG.2

FIG.3

FIG.3-a

FIG.3-b

FIG.3-c

FIG. 6

FIG. 4

FIG. 5

2/2

0025728

Office européen
des brevets

**RAPPORT DE RECHERCHE EUROPEENNE**

0025728

Numéro de la demande

EP 80 40 1187

| Catégorie | Citation du document avec indication, en cas de besoin, des parties pertinentes | Revendication concernée |
|---|---|---|
| | US - A - 4 137 060 (Ch. TIMMERMANN)<br><br>* colonnes 2,3; figure 3 * | 1-4,9 |
| | FR - A - 2 399 675 (CONSIGLIO NAZ-IONALE DELLE RICERCHE)<br><br>* page 2; revendication 5; figures 1-3 * | 1-4 |
| | US - A - 3 843 865 (G. NATH)<br><br>* colonnes 5,6; figures 1-3 * | 2,7,8 |

**DOCUMENTS CONSIDERES COMME PERTINENTS**

**CLASSEMENT DE LA DEMANDE** (Int. Cl. 3)

G 02 B 7/26

**DOMAINES TECHNIQUES RECHERCHES** (Int. Cl. 3)

G 02 B 7/26

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 08-10-1980 | MALIC |

OEB Form 1503.1    06.78